# EUROPEAN PATENT APPLICATION

(11) **EP 2 833 641 A1**
(43) Date of publication of application: **04.02.2015**
(21) Application number: 13768296.9
(22) Date of filing: 18.03.2013
(51) Int. Cl.: H04N 21/236, H04B 1/76, H04B 7/155, H04N 21/2383

(54) **VIDEO TRANSCEIVER SYSTEM, VIDEO TRANSMISSION METHOD, AND TRANSMISSION DEVICE**

(30) Priority: 26.03.2012 JP 2012068758
(71) Applicant: Mitsubishi Electric Corporation, Tokyo 100-8310 (JP)
(72) Inventor: YOSHIOKA, Masaru, Tokyo 100-8310 (JP); YAMAMOTO, Yoshihiko, Tokyo 100-8310 (JP)
(74) Representative: Sajda, Wolf E.
(86) International application number: PCT/JP2013/057627
(87) International publication number: WO 2013/146407

(57) **Abstract**

A video transmitting and receiving system (10) includes a transmitting device (101) that transmits a packet, and a receiving device (111) that receives the packet transmitted from the transmitting device (101). The transmitting device (101) inserts null data into an unused space after a video signal has been encoded and generates a packet having a predetermined packet length. Then, the null data is replaced with known data to modulate and the packet is transmitted. The receiving device (111) receives the transmitted packet to demodulate and waveform distortion of the packet is detected based on the known data pre-registered to correct so as to perform waveform equalization.

## Description

### Technical Field

The present disclosure relates to a video transmitting and receiving system, video transmitting method and transmitting device.

### Background Art

When communicating via a transponder such as satellite communications and satellite broadcasting, non-linear characteristics of an amplifier and a transponder cause waveform distortions, which has a negative influence on transmission performance. Furthermore, in a Line of Sight (LOS) communication that does not use a transponder, non-linear characteristics of an amplifier cause waveform distortions, which has a negative influence on transmission performance.

There are various proposals against performance degradation, such as, by comparing a waveform of known data within transmission data series with a waveform of known data received at a reception side, the component of the waveform distortion generated between the transmission and reception is detected and is removed by an inverse correction.

For example, Patent Literature 1 discloses a digital broadcast transmitting and receiving system that, for maintaining a transmission rate constant, inserts null data from outside at a given position in transmission data, replaces the inserted null data with known data, compares a waveform of the transmission data with a waveform of the known data received at a reception side to detect the component of the waveform distortion generated between the transmission and reception, and removes the component of the waveform distortion with an inverse correction.

### Citation List

### Patent Literature

- Patent Literature 1:: National Patent Publication No. 2007-519 359

### Summary of the Invention

### Technical Problem

As known data, data that is not included in a main signal such as video data and the like is used; thus, as the digital broadcast transmitting and receiving system of Patent Literature 1, null data from outside is inserted within fixed-length data and the null data is replaced with the known data, the video data is reduced, which causes the video quality to be deteriorated.

The present disclosure has been made in consideration of the above-mentioned actual condition, and it is an objective of the present disclosure to prevent deterioration in video quality in a video transmitting and receiving system.

### Solution to the Problem

To achieve the objective, the video transmitting and receiving system according to the present disclosure includes a transmitting device that is adapted to transmit a packet and a receiving device that receives the packet transmitted from the transmitting device. The transmitting device includes: a null data inserter that is adapted to insert null data into a unused space after a video signal has been encoded, and to generate a packet having a predetermined packet length; a null data detector that is adapted to detect the null data inserted by the null data inserter; a known data replacer that is adapted to replace the null data detected by the null data detector with known data; a packet modulation unit that is adapted to modulate the packet having the known data as a result of replication by the known data replacer; and a packet transmitter that is adapted to transmit the packet modulated by the packet modulation unit.

The receiving device includes a demodulation unit that is adapted to receive the packet transmitted from the packet transmitter and to demodulate the packet modulated by the packet modulation unit; a known data detector that is adapted to detect waveform distortions of the packet demodulated by the demodulation unit based on the known data pre-registered; and a waveform equalizer that is adapted to perform waveform equalization by correcting the waveform distortion detected by the known data detector using the known data.

### Advantageous Effects of the Invention

The present disclosure is capable of preventing deterioration in video quality.

### Brief Description of the Drawings

- FIG. 1: is a block diagram illustrating a configuration of a video transmitting and receiving system according to an embodiment of the present disclosure;
- FIG. 2: is a drawing showing an example of a video encoded signal;
- FIG. 3: is an illustration showing flows of processing in a modulator and a demodulator;
- FIG. 4: is an illustration showing an example of replacing null data of a packet having a PID = 8191 with training data;
- FIG. 5: is an illustration showing an example of replacing null data in a packet having null bytes in its payload with training data;
- FIG. 6: is a flowchart illustrating a series of procedures of an operation of the video transmitting and receiving system shown in FIG. 1;
- FIG. 7: is a flowchart illustrating a series of procedures of null data detection; and
- FIG. 8: is a flowchart illustrating a series of procedures of an operation of the video transmitting and receiving system shown in FIG. 1.

### Description of Embodiments

An embodiment of the present disclosure will be described, in detail, hereafter with reference to the drawings.

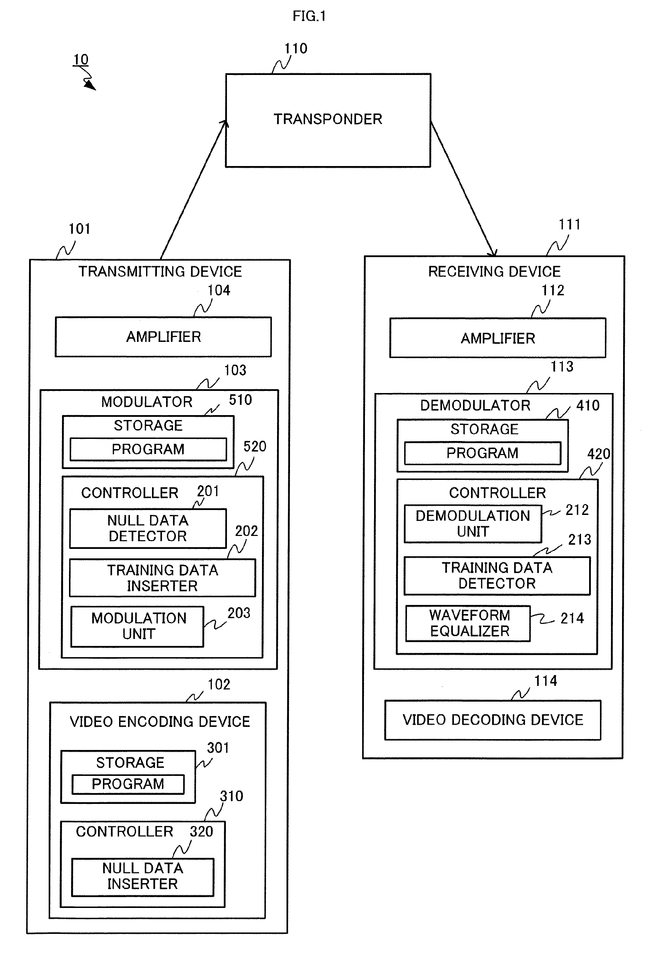

A video transmitting and receiving system 10 includes, as shown in FIG. 1, a transmitting device 101, a transponder 110, and a receiving device 111. A signal transmitted from the transmitting device 101 is propagated to the receiving device 111 via the transponder 110.

The transmitting device 101 is a device that performs processes of encoding, modulation, amplification and the like of the input video signal, and transmits a video encoded signal processed by the above-mentioned processes to the transponder 110. The transmitting device 101 is configured to have a video encoding device 102, a modulator 103, an amplifier 104 and the like.

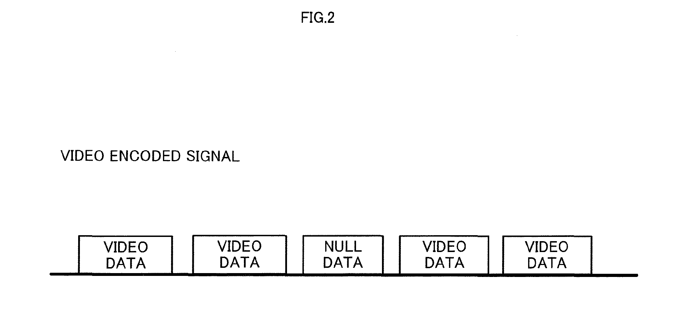

The video encoding device 102 is such a device that generates, by encoding the input video signal, the video encoded signal as shown in FIG. 2, and supplies the video encoded signal to the modulator 103. The video encoding device 102 includes a storage 301 and a controller 310. The amount of information of the video encoded signal generated by the video encoding device 102 sequentially varies depending on the video to be encoded.

For example, in an encoding method such as the Moving Picture Experts Group (MPEG)-2, since much common image information is included in each pair of a former frame and a latter frame, the amount of information is reduced by deleting overlap of the former frame and the latter frame and predicting an image from the former frame or the latter frame.

Thus, in the case of a scene including less movement (in the case where a difference between the former frame and the latter frame is small), the amount of information may be kept small in comparison with that of the case where a scene including many image changes such as scene changes.

On the other hand, in the case of a scene including many image changes such as scene changes (in the case where a difference between the former frame and the latter frame is greater), the amount of information may be greater in comparison with that of the case where a scene including less movement.

When the data is input as the MPEG-2 transmission stream format to the modulator 103, for maintaining a transmission band width to be constant, the transmission rate should be maintained constant. For the purpose thereof, the video encoding device 102 controls, when the amount of information is small, the transmission rate to maintain a constant rate by inserting spuriously null data that does not include ordinary data into the video encoded signal generated by the video encoding device 102.

The storage 301 is, for example, memory and the like, and stores a program that performs a function of the controller 310.

The controller 310 includes, for example, a CPU and the like, operates according to the program stored in the storage 301, and has a null data inserter 320 as a function unit provided by the program. The null data inserter 320 calculates the amount of information of the video encoded signal according to the program stored in the storage 301, and generates a packet in which the null data is inserted depending on the amount of information.

The null data inserter 320, for example, inserts the null data so that the packet length becomes the predetermined packet length, when the amount of information of the video encoded signal is less than the amount of information represented by the predetermined packet length or when the video encoded signal is not input for the predetermined time.

On the other hand, when the amount of information is greater than the amount of information represented by the predetermined packet length, the null data inserter 320 divides the amount of information by the predetermined packet length, and inserts the null data to a packet having a remainder so that the packet length of the packet having the remainder becomes the predetermined packet length. According to this, the null data may be inserted without reducing the video data; thus, deterioration in video quality can be prevented.

For example, when the encoding method used in the video encoding device 102 is an MPEG-2 format, a packet of which the entire payload of 184 bytes, which is for data body to be transmitted and received, is null data and a packet in which null data is partially inserted into the payload are generated.

In particular, in the case of the packet of which the entire payload is null data, a 4-byte packet identifier (PID), which is given to each packet, is a Packet ID (PID) = 8191, and the packet is generated to maintain the transmission rate constant. The packet in which null data is partially inserted into the payload is such a packet that video data is ended during being inserted into the packet payload, and the null data is inserted into the remaining payload to maintain the transmission rate constant.

Also, as shown in FIG. 1, the modulator 103 is a device that includes a circuit controlling an amplitude and phase of a carrier based on a signal to be transmitted, and modulates the signal encoded by the video encoding device 102 to supply the signal to the amplifier 104. The modulator 103 includes storage 510 and a controller 520.

The storage 510 is, for example, a memory and the like, and stores a program that performs various functions of the controller 520.

The controller 520 includes, for example, a CPU and the like, operates according to the program stored in the storage 510, and includes a null data detector 201, a training data inserter 202 and a modulation unit 203 as function units provided by the program.

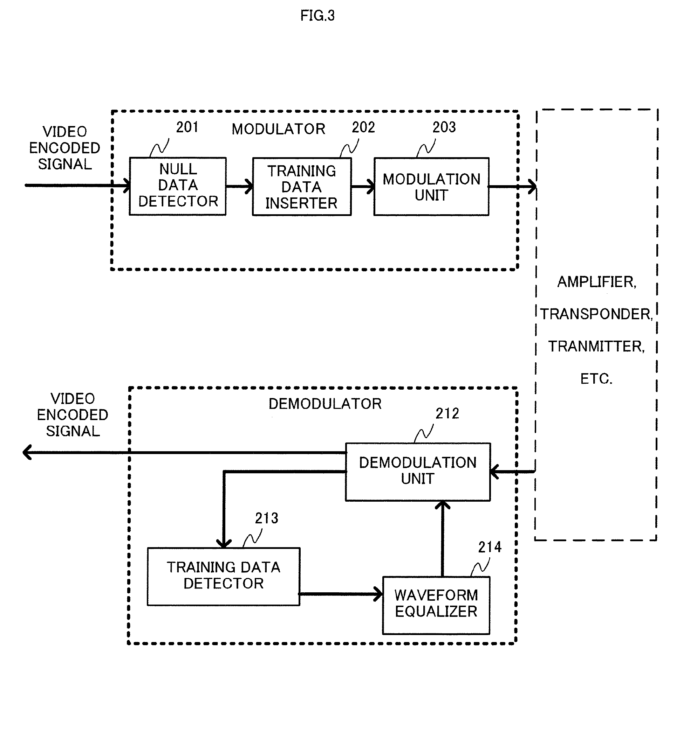

As shown in FIG. 3, the null data detector 201 has functions to detect null data included in a video encoded signal supplied from the video encoding device 102 and to supply position information that indicates a position of the detected null data and the video encoded signal to the training data inserter 202.

The null data detection is performed, for example, when a video encoding method of the video encoding device 102 is the MPEG-2 format, by determining whether or not the supplied video encoded signal includes the packet having packet identifier of PID = 8191 or data that coincides with the data format of the pre-stored null data.

The training data inserter 202 has functions to replace the null data included in the video encoded signal with pre-registered training data based on the position information of the null data that is supplied from the null data detector 201, and to supply the pre-registered training data to the modulation unit 203. Here, the training data is known signal data defined by standards and the like in advance for the modulator 103 and a demodulator 113, which will be described later.

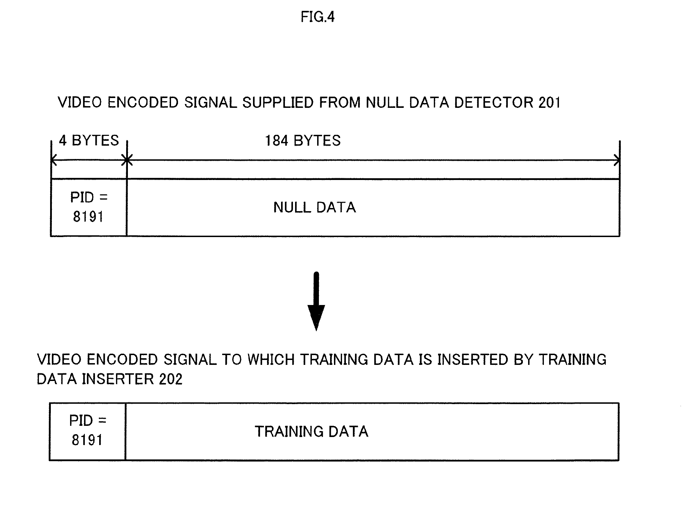

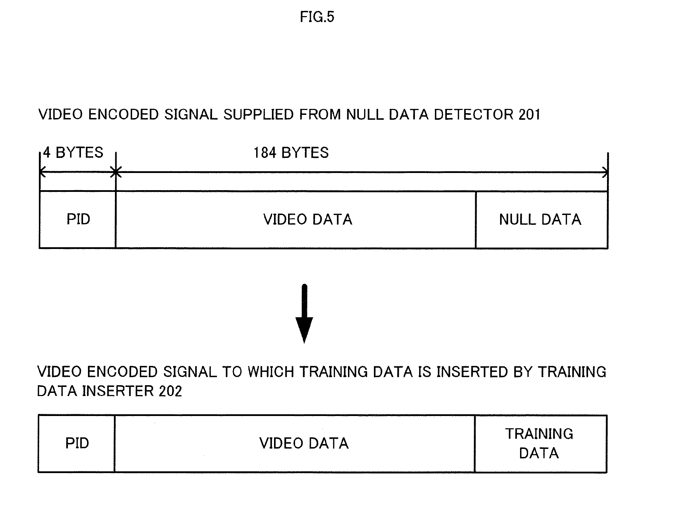

The training data and the format thereof are pre-registered with the modulator 103 and the demodulator 113. For example, as shown in FIG. 4, in the case of the packet identified by the packet identifier of PID = 8191, within the packet of 188 bytes, the entire payload of 184 bytes is null data; thus, the training data inserter 202 replaces the entire payload with the training data. As shown in FIG. 5, however, in the case where the null data is inserted into a part of the packet payload, the training data inserter 202 replaces the null data inserted into the part of the payload with the training data.

Also, as shown in FIG. 3, the modulation unit 203 has a function of modulating the video encoded signal in which the null data is replaced with the training data by the training data inserter 202, and supplying the video encoded signal to the amplifier 104.

Also, as shown in FIG. 1, the amplifier 104 is a device that includes a circuit with a function of amplifying an input signal to a desired transmission level, amplifies the modulated video encoded signal supplied from the modulation unit 203, and transmits the amplified video encoded signal to the receiving device 111 via the transponder 110. Furthermore, when the video encoded signal supplied from the modulation unit 203 is amplified by the amplifier 104, waveform in the video encoded signal is distorted due to the non-linear characteristics of the amplifier 104.

The transponder 110 is a relay device that transmits the video encoded signal transmitted from the transmitting device 101 to the receiving device 111. In the video encoded signal transmitted from the transmitting device 101, a waveform is distorted due to the non-linear characteristics of the transponder 110.

The receiving device 111 is a device that receives the video encoded signal transmitted from the transponder 110, and includes an amplifier 112, a demodulator 113, and a video decoding device 114.

The amplifier 112 is a device that includes a circuit with a function of amplifying an input signal, amplifies the video encoded signal received via the transponder 110, and supplies the received video encoded signal to the demodulator 113.

The demodulator 113 is a device that demodulates the video encoded signal supplied from the amplifier 112, performs waveform equalization by detecting the training data and comparing the detected training data with known signal data, and transmits the video encoded signal to the video decoding device 114. The demodulator 113 includes storage 410 and a controller 420.

The storage 410 includes, for example, a memory and the like, and stores a program that performs various functions of the controller 420.

The controller 420 includes, for example, a CPU and the like, operates according to the program stored in the storage 410, and includes a demodulation unit 212, a training data detector 213 and a waveform equalizer 214 as function units provided by the program.

The demodulation unit 212 has functions of, as shown in FIG. 3, demodulating a video encoded signal with waveform distortion supplied from the amplifier 112, and supplying the demodulated video encoded signal to the training data detector 213.

The demodulation unit 212 further has a function of, based on the component of the waveform distortion supplied from the waveform equalizer 214, performing an inverse correction of the video encoded signal with waveform distortion supplied from the amplifier 112, and supplying the video encoded signal to the video decoding device 114 by removing the waveform distortion of the video encoded signal.

The training data detector 213 has functions of detecting the training data included in the video encoded signal supplied from the demodulation unit 212, and extracting the detected training data to supply to the waveform equalizer 214. Furthermore, the training data supplied to the waveform equalizer 214 has waveform distortion, and the training data having the waveform distortion is supplied to the waveform equalizer 214.

The detection of the training data is performed by comparing the data format of each piece of data included in the video encoded signal to the format of the pre-registered training data, and it is determined that the data for which the data format coincides with the format of the pre-registered training data is training data.

The waveform equalizer 214 has functions of comparing the training data with the waveform distortion supplied from the training data detector 213 with the pre-registered training data and calculating the difference therebetween to extract the component of the waveform distortion included in the supplied training data, and supplying it to the demodulation unit 212.

Also, as shown in FIG. 1, the video decoding device 114 is a device that includes a circuit with a function of turning back the encoded signal to a signal before the encoding, and performs a decoding process to the video encoded signal from which the waveform distortion is removed and which is input from the demodulation unit 212 of the demodulator 113.

The above is an explanation about the configuration of the video transmitting system 10 according to the present embodiment.

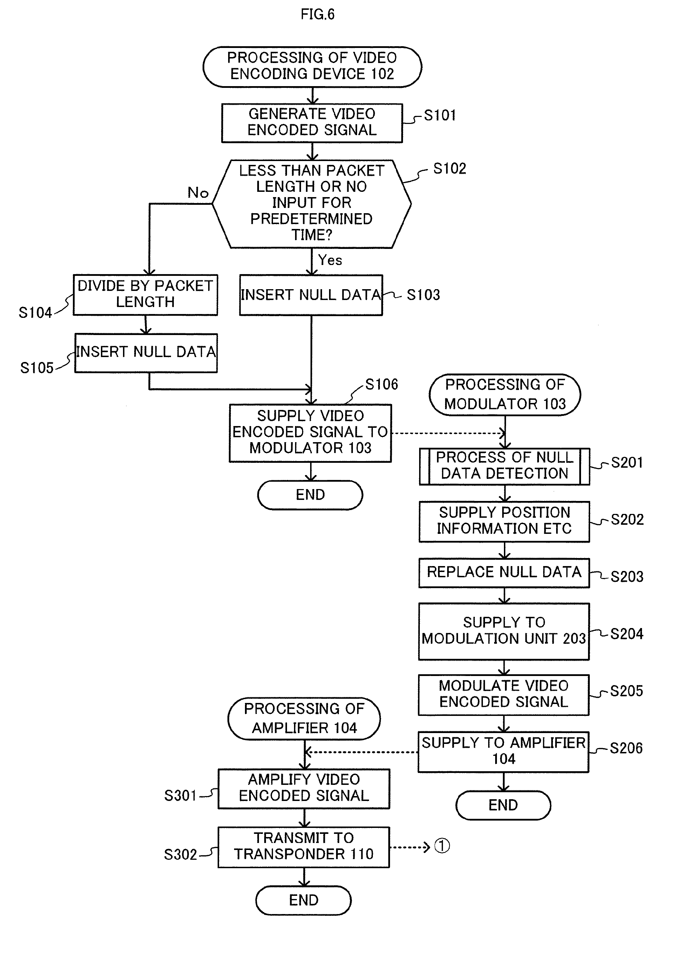

Next, the operation of the video transmitting system 10 will be described hereafter with reference to FIGS. 6 to 8. The video transmitting system 10 starts a process by an input of a video signal to the video encoding device 102 of the transmitting device 101.

As shown in FIG. 6, the video encoding device 102 of the transmitting device 101 encodes the input video signal to generate a video encoded signal (Step S101). Thereafter, through the function of the null data inserter 320, the generated video encoded signal is compared with the predetermined packet length, and it is determined whether or not the amount of information of the video encoded signal is less than the amount of information represented by the predetermined packet length (Step S102).

When it is determined that the amount of information of the video encoded signal is less than the amount of information represented by the predetermined packet length or the video signal is not input for the predetermined time (Step S102; Yes), null data is inserted until packet length becomes the predetermined packet length (Step S103). Furthermore, when the video signal is not input for the predetermined time, a packet in which the entire payload is null data is generated in the process of Step S103.

On the other hand, when the amount of information of the video encoded signal is greater than the amount of information represented by the predetermined packet length (Step S102; No), the amount of information is divided by the predetermined packet length (Step S104), and the null data is inserted to a packet having a remainder so that the packet length becomes the predetermined packet length (Step S105). Thereafter, the video encoded signal with the inserted null data is supplied to the modulator 103 (Step S106), and the processing of the video encoding device 102 ends.

The modulator 103 performs, through the function of the null data detector 201, a process of detecting null data included in the video encoded signal supplied from the video encoding device 102 (Step S201).

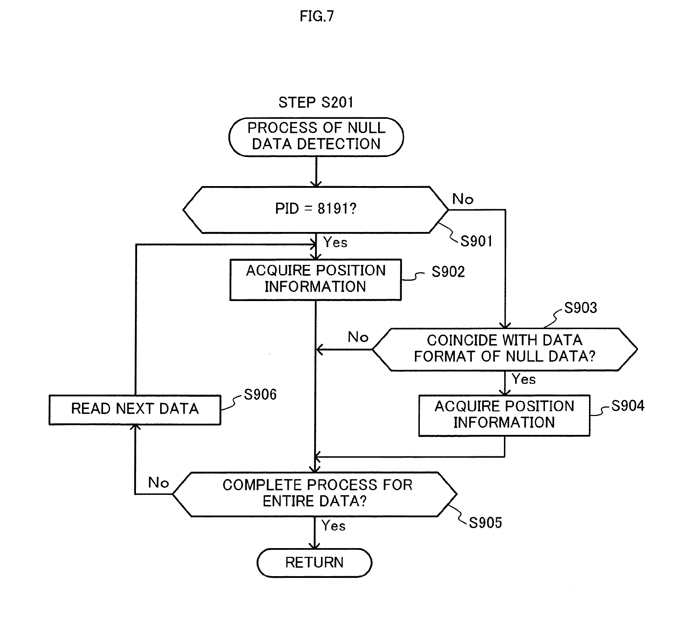

The process of null data detection determines, as shown in FIG. 7, whether or not the supplied video encoded signal is a packet that has the packet identifier of PID = 8191 (Step S901). When it is determined that the supplied video encoded signal is a packet of PID = 8191 (Step S901; Yes), it is determined that the entire payload of the packet is null data, and position information specifying the null data position is acquired (Step S902).

On the other hand, when the supplied video encoded signal is not determined to be a packet of PID = 8191 (Step S901; No), it is determined whether or not the supplied video encoded signal coincides with the data format of the pre-stored null data (Step S903). When it is determined that the supplied video encoded signal coincides with the data format of the null data (Step S903; Yes), the position information specifying the null data position is obtained (Step S904).

When it is determined that the supplied video encoded signal does not coincide with the data format of the null data (Step S903; No) or after performing the processes in Step S902 or Step S904, it is determined whether or not the process of null data detection is performed for the entire data included in the video encoded signal (Step S905). When it is determined that the process is performed for the entire data (Step S905; Yes), the processing ends. When it is determined that the process is not performed for the entire data (Step S905; No), the next data in the video encoded signal is read (Step S906), and the process returns to Step S901.

Also, as shown in FIG. 6, after performing the process of null data detection in Step S201, the detected position information showing the null data position and the video encoded signal are supplied to the training data inserter 202 (Step S202). Thereafter, through the function of the training data inserter 202, based on the position information of the null data supplied from the null data detector 201, the null data included in the video encoded signal is replaced with training data (Step S203), and the video encoded signal is supplied to the modulation unit 203 (Step S204).

The modulation unit 203 modulates the video encoded signal in which the null data is replaced with the training data (Step S205), the video encoded signal is supplied to the amplifier 104 (Step S206), and the processing of the modulator 103 ends.

Subsequently, the amplifier 104 amplifies the video encoded signal supplied from the modulation unit 203 (Step S301), and transmits the video encoded signal to the transponder 110 at a constant transmission rate (Step S302) to end the processing.

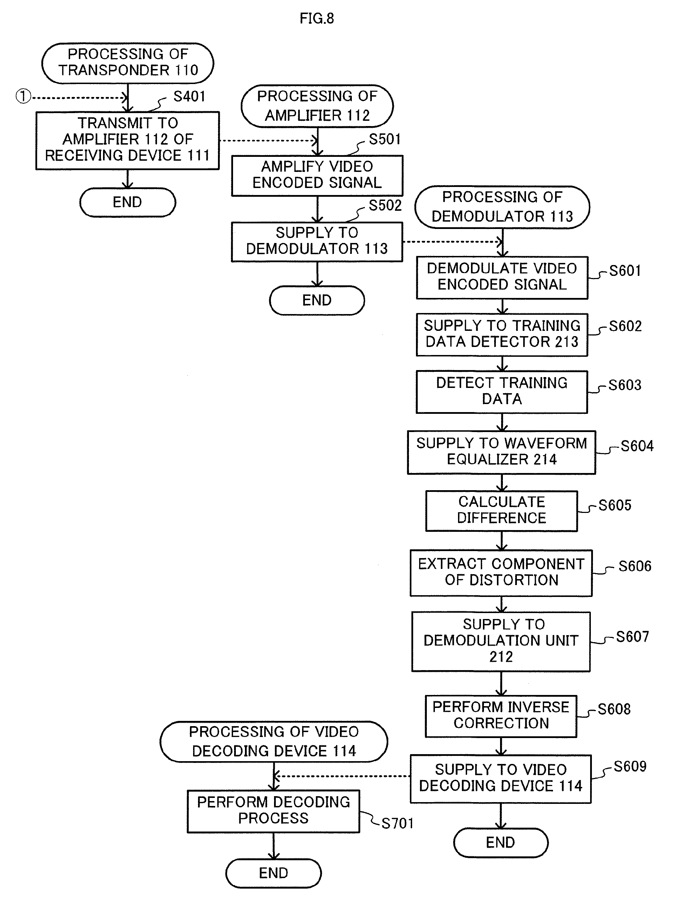

If the transponder 110, as shown in FIG. 8, receives the video encoded signal transmitted from the amplifier 104 of the transmitting device 101, the transponder 110 transmits the video encoded signal to the amplifier 112 of the receiving device 111 (Step S401) to end the processing.

The amplifier 112 of the receiving device 111 amplifies the video encoded signal transmitted from the transponder 110 (Step S501), and supplies the video encoded signal to the demodulator 113 (Step S502). Then, the processing of the amplifier 112 ends.

The demodulator 113 demodulates, through the function of the demodulation unit 212, the video encoded signal with waveform distortion supplied from the amplifier 112 (Step S601), and supplies the demodulated video encoded signal to the training data detector 213 (Step S602). The training data detector 213 detects the training data included in the video encoded signal supplied from the demodulation unit 212 (Step S603), and extracts the detected training data to supply to the waveform equalizer 214 (Step S604).

The waveform equalizer 214 compares the training data having the waveform distortion with the pre-registered training data, and calculates the difference therebetween (Step S605). Thereafter, the waveform equalizer 214 extracts the component of the waveform distortion included in the training data (Step S606), and supplies it to the demodulation unit 212 (Step S607).

The demodulation unit 212 performs an inverse correction of the video encoded signal with the waveform distortion supplied in the process of Step S502, based on the component of the waveform distortion (Step S608), and supplies the video encoded signal to the video decoding device 114 by removing the waveform distortion of the video encoded signal (Step S609). Then, the processing of the demodulator 113 ends.

The video decoding device 114, when the video encoded signal is supplied from the demodulation unit 212, performs a decoding process of the video encoded signal (Step S701), and the processing of the video decoding device 114 ends.

The above is the operation of the video transmitting system 10 according to the present embodiment.

As described above, the video transmitting system 10 according to the present embodiment inserts null data without reducing video data, and replaces the inserted null data with training data to perform transmission and reception of a video encoded signal. That is, as for inserting the training data, an effect of waveform equalization may be achieved without inserting a dedicated insertion section, and while a proper transmission rate is maintained, deterioration in video quality can be prevented.

Also, generally, as the effect of waveform equalization increases as the percentage of the training data in a packet increases, in the case of the packet that has the packet identifier of PID = 8191, that is, the entire payload is null data, the null data of 184 bytes may be replaced with the training data and the effect of waveform equalization may be increased.

Furthermore, in the video transmitting system 10 according to the present embodiment, the training data is inserted into the video encoded signal during the communication. Thus, even if there is a temporal variation in the waveform distortion in the transponder 110, the waveform equalization according to the temporal variation can be performed.

### Modifications

The present disclosure is not limited to the above-mentioned embodiment, and may have various modifications and applications. The above-mentioned embodiment illustrates an example of transmitting a video encoded signal transmitted from a transmitting device 101 to a receiving device 111 via a transponder 110; however, this is merely an example. For example, the video encoded signal transmitted from the transmitting device 101 may directly be transmitted to a receiving device 111 by bypassing the transponder 110.

Furthermore, the above-mentioned embodiment illustrates an example of replacing, through the function of a training data inserter 202, null data inserted by a null data detector 201 with training data; however, this is merely an example. For example, a part of the inserted null data may be replaced by the training data.

In this case, for example, the data length of the inserted null data may be compared with the predetermined data length, and when the data length of the null data is longer than the predetermined data length, the null data may be replaced with training data. Hereby, the accuracy of an inverse correction in a waveform equalizer 214 may be maintained by replacing the null data of the given data length with the training data.

The above-mentioned embodiment describes an example that an encoding method in a video encoding device 102 has an MPEG-2 format; however, the encoding method in the video encoding device 102 is not limited to the MPEG-2 format, and may have an arbitrarily format.

The above-mentioned embodiment includes an example of null data detection, in a null data detector 201 of a modulator 103, by determining whether or not the supplied video encoded signal has a packet that has a packet identifier of PID = 8191 or a packet that coincides with a data format of pre-stored null data; however, this is merely an example. The detection of null data may be, for example, performed only by determining whether or not the supplied video encoded signal coincides with the data format of the pre-stored null data or performed using alternative methods.

The above-mentioned embodiment includes an example of detecting, in a training data detector 213 of a demodulator 113, training data by comparing a data format of each piece of data included in a video encoded signal with a format of pre-registered training data; however, this is merely an example. For example, the training data may be detected by comparing each piece of data included in the video encoded signal with the pre-registered training data.

In this case, the video encoded signal includes a component of the waveform distortion generated by non-linear characteristics of a transponder 110 and the like; thus, the each piece of data included in the video encoded signal may not necessarily coincides with the pre-registered training data perfectly. Thus, when a threshold value is registered in advance and the matching percentage is equal to or more than the threshold value, the data included in the video encoded signal may be determined to be the training data.

Furthermore, if the above-mentioned functions are performed by sharing between an Operating System (OS) and an application, or by cooperating between the OS and the application, only the portion other than the OS may be stored in a medium.

By superimposing each of the programs on a carrier, distribution may be performed via a communication network. For example, the programs may be posted on an electronic bulletin board (Bulletin Board System, BBS) and distributed through a network. Then, it may be configured to perform the above-mentioned processes by starting the programs and similarly performing the other application programs under the control of an operating system.

The above-mentioned embodiments may variously be modified within the scope and spirit of the present disclosure. The above-mentioned embodiment is given for explaining the present disclosure, and is not intended to limit the scope and spirit of the present disclosure. That is, the scope of the present disclosure is defined by claims, not embodiments. Various changes and modifications made within the limitations of claims and the scope equivalents to the claims are also included in the scope and spirit of the present disclosure.

The present application claims the benefit of a priority based on Japanese Patent Application No. 2012-68758 filed on March 26, 2012, including the specification, claims, drawings and abstract. The disclosure of the original Patent Application is herein incorporated entirely in this specification by reference.

### Industrial Applicability

The present disclosure may be used for, for example, a video transmitting and receiving system that transmits and receives video.

### List of Reference Signs

- 10: Video transmitting and receiving system
- 101: Transmitting device
- 102: Video encoding device
- 103: Modulator
- 104: Amplifier
- 110: Transponder
- 111: Receiving device
- 112: Amplifier
- 113: Demodulator
- 114: Video decoding device
- 201: Null data detector
- 202: Training data inserter
- 203: Modulation unit
- 212: Demodulation unit
- 213: Training data detector
- 214: Waveform equalizer
- 301: Storage
- 310: Controller
- 320: Null data inserter
- 410: Storage
- 420: Controller
- 510: Storage
- 520: Controller

## Claims

1. A video transmitting and receiving system comprising:
- a transmitting device that is adapted to transmit a packet; and
- a receiving device that is adapted to receive the packet transmitted from the transmitting device,
wherein the transmitting device comprises:
- a null data inserter that is adapted to insert null data into an unused space after a video signal has been encoded, and to generate a packet having a predetermined packet length;
- a null data detector that is adapted to detect the null data inserted by the null data inserter;
- a known data replacer that is adapted to replace the null data detected by the null data detector with known data;
- a packet modulation unit that is adapted to modulate the packet in which the null data is replaced with the known data by the known data replacer; and
- a packet transmitter that is adapted to transmit the packet modulated by the packet modulation unit, and
wherein the receiving device comprises:
- a demodulation unit that is adapted to receive the packet transmitted from the packet transmitter and to demodulate the packet modulated by the packet modulation unit;
- a known data detector that is adapted to detect a waveform distortion of the packet demodulated by the demodulation unit based on the known data pre-registered; and
- a waveform equalizer that is adapted to perform waveform equalization by correcting the waveform distortion detected by the known data detector using the known data.

2. The video transmitting and receiving system according to claim 1,
wherein the null data inserter is adapted to generate, when the video signal is not input for a predetermined time, a packet having an identifier identifying the null data and the null data, and
the packet transmitter is adapted to transmit the modulated packet at a constant transmission rate.

3. The video transmitting and receiving system according to claim 1 or 2,
wherein the known data replacer is adapted to replace, when a data length of the null data detected by the null data detector is longer than a predetermined data length, a portion of the null data with the known data.

4. A video transmitting method executed by a transmitting device,
the method comprising:
- an inserting step inserting null data into an unused space after a video signal has been encoded, and generating a packet having a predetermined packet length;
- detecting step detecting the null data inserted by the inserting step;
- a replacing step replacing the null data detected by the detecting step with known data;
- a modulating step modulating the packet in which the null data is replaced with the known data by the replacing step; and
- a transmitting step transmitting the packet modulated by the modulating step,
wherein
- the inserting step generates, when the video signal is not input for a predetermined time, a packet having null data and an identifier identifying the null data, and
- the transmitting step transmits the modulated packet at a constant transmission rate.

5. A transmitting device comprising:
- a null data inserter that is adapted to insert null data into an unused space after a video signal has been encoded, and generates a packet having a predetermined packet length;
- a null data detector that is adapted to detect the null data inserted by the null data inserter;
- a known data replacer that is adapted to replace the null data detected by the null data detector with known data;
- a packet modulation unit that is adapted to modulate the packet in which the null data is replaced with the known data by the known data replacer; and
- a packet transmitter that is adapted to transmit the packet modulated by the packet modulation unit,
wherein
- the null data inserter is adapted to generate, when the video signal is not input for a predetermined time, a packet comprising an identifier identifying the null data and the null data, and
- the packet transmitter is adapted to transmit the modulated packet at a constant transmission rate.
